# EUROPÄISCHE PATENTSCHRIFT

(11) **EP 2 249 739 B1**
(45) Veröffentlichungstag und Bekanntmachung des Hinweises auf die Patenterteilung: **06.07.2011**
(21) Anmeldenummer: 09713162.7
(22) Anmeldetag: 09.02.2009
(51) Int. Cl.: A61C 8/00

(54) **RESORBIERBARES IMPLANTAT ZUM EINBRINGEN IN EINEN ALVOEOLARRAUM**
RESORBABLE IMPLANT FOR INTRODUCING INTO AN ALVEOLAR SPACE
IMPLANT RÉSORBABLE DESTINÉ À ÊTRE INTRODUIT DANS UNE CAVITÉ ALVÉOLAIRE

(30) Priorität: 23.02.2008 DE 102008010893
(43) Veröffentlichungstag der Anmeldung: 17.11.2010
(73) Patentinhaber: Resorba Wundversorgung GmbH & Co. KG, 90475 Nürnberg (DE)
(72) Erfinder: SORG, Karl-Heinz, 93333 Neustadt/Donau (DE); HILTNER, Claus, Martin, 90408 Nürnberg (DE)
(74) Vertreter: Rau, Schneck & Hübner
(86) Internationale Anmeldenummer: PCT/EP2009/000876
(87) Internationale Veröffentlichungsnummer: WO 2009/103437

(56) Entgegenhaltungen:
- EP-A- 1 433 489
- WO-A-2008/076671
- DE-A1- 19 619 922
- US-A1- 2002 013 626

## Beschreibung

Die Erfindung betrifft ein Implantat zum Einbringen in einen Alveolarraum.

Nach einer Zahnextraktion sind in der Zahnmedizin verschiedene Behandlungsverfahren bekannt. Bei einem ersten Ansatz erfolgt zunächst eine Ausheilung der Zahntasche (= Alveole), um danach mit einer Zahnersatz-Behandlung für z.B. eine Zahnimplantation neu zu beginnen. Hierbei kann es während der Abheilzeit zu einem unerwünschten Schwund an Knochensubstanz kommen. Ursache hierfür ist z.B. eine Entzündung in der Alveole, die die fibrinolytische Aktivität des Blutes erhöht, weshalb sich kein stabiles Blutgerinnsel (= Koagulum) ausbilden kann. Es kommt zu einer gestörten Wundheilung und einem Verlust von Knochengewebe. Als Folge davon lässt sich der Zahnersatz entweder nicht mehr optimal verankern oder es muss sogar eine aufwändige Regenerationsbehandlung des Kieferknochens zwischengeschaltet werden.

Bei einem anderen Ansatz wird unmittelbar nach der Zahnextraktion ein Implantat eingesetzt. Ein Beispiel für ein derartiges Implantat ist z.B. in der DE 196 30 034 A1 beschrieben. Es enthält einen harten Titan-Kern, der unter anderem mit einer kollagenhaltigen Beschichtung versehen ist und der nach einer Einwachsphase als Basis für eine Zahnkrone dient. Bei diesen unmittelbar eingesetzten Implantaten kann es z.B. wegen Entzündungen in der Alveole zu Problemen beim Einwachsen kommen.

In der EP1 433 489 A1 wird ein Implantat zum Einbringen in einen Alveolarraum beschrieben. Dieses Implantat ist als resorbierbarer Verbundkörper aus zwei Teilkörpern ausgeführt. Der erste Teilkörper kann ein eine Körpergrundfläche aufweisender Kegel, Würfel oder Zylinder sein. Der zweite Teilkörper ist als eine Abdeckmembran mit einer Membranfläche ausgebildet, die größer als die Körpergrundfläche ist, wobei die Abdeckmembran bei einer Ausführungsvariante an zwei Seiten seitlich über die Körpergrundfläche des ersten Teilkörpers hinausragt. Die beiden Teilkörper sind im Bereich der aneinander angrenzenden Körpergrundfläche und Membranfläche fest miteinander verbunden.

In der US 2002/0013626 A1 ist die Verwendung von Kollagen als Material für ein Implantat beschrieben.

EP-A-2 104 518, das einen Stand der Technik gemäss Artikel 54 (3) EPÜ betrifft, beschreibt ein Implantat zum Einbringen in einen Alveolarraum, welches als resorbierbarer Verbundkörper aus mindestens einem ersten und einem zweiten Teilkörper ausgeführt ist. Der erste Teilkörper ist als ein eine Körpergrundfläche aufweisender Quader ausgebildet. Der zweite Teilkörper ist als eine Abdeckmembran mit einer Membranfläche, die grösser als die Körpergrundfläche ist, ausgebildet. Die Abdeckmembran ist so auf die Körpergrundfläche aufgesetzt, dass sie seitlich überall über die Körpergrundfläche hinausragt. Der erste und der zweite Teilkörper sind im Bereich der aneinander angrenzenden Körpergrundfläche und Membranfläche fest miteinander verbunden.

Die Aufgabe der Erfindung besteht darin, ein Implantat der eingangs bezeichneten Art anzugeben, das einfach und zuverlässig in der Handhabung ist sowie eine gute Ausheilung der Alveole ermöglicht.

Zur Lösung dieser Aufgabe wird ein Implantat entsprechend den Merkmalen des Patentanspruchs 1 angegeben. Das erfindungsgemäße Implantat ist als resorbierbarer Verbundkörper aus mindestens einem ersten und einem zweiten Teilkörper ausgeführt, wobei
a) der erste Teilkörper als ein eine Körpergrundfläche aufweisender Kegel, Kegelstumpf oder Zylinder ausgebildet ist,
b) der zweite Teilkörper als eine Abdeckmembran mit einer Membranfläche, die größer als die Körpergrundfläche ist, ausgebildet ist,
c) der erste und der zweite Teilkörper im Bereich der aneinander angrenzenden Körpergrundfläche und Membranfläche fest miteinander verbunden sind,
d) die Abdeckmembran auf die Körpergrundfläche aufgesetzt ist, so dass sie seitlich überall über die Körpergrundfläche hinausragt, und
e) die Abdeckmembran in einem über die Körpergrundfläche hinaus stehenden Randbereich ein- oder mehrfach geschlitzt ist.

Das erfindungsgemäße Implantat ermöglicht eine vollständige Regeneration von Knochen sowie von Binde- und Epithelgewebe. Insbesondere erhält es die Knochensubstanz des Alveolarkamms und ermöglicht das Einwachsen von zusätzlichem Knochengewebe in die Alveole, so dass für eine spätere Verankerung von Zahnersatz, ausreichend Knochensubstanz vorhanden ist. Nach der Zahnentfernung bildet sich bei Verwendung des erfindungsgemäßen Implantats ein stabiles Koagulum innerhalb des Alveolarraums. Dieses Koagulum wird im Verlauf der Wundheilung durch Knochen ersetzt. Das erfindungsgemäße Implantat wird während des Wundheilungsprozesses insbesondere vollständig resorbiert.

Der erste Teilkörper des erfindungsgemäßen Implantats ist aufgrund seiner Kegel(stumpf)form sehr gut an die Form der Alveole angepasst. Er füllt sie gut aus. Außerdem wirkt der erste Teilkörper blutstillend und begünstigt die Bildung eines stabilen Koagulums, so dass ein Kollaps des Alveolarraums sicher verhindert wird. Das Einwachsen von Knochengewebe wird somit gefördert. Das erfindungsgemäße Implantat wirkt also auch osteokonduktiv.

Der zweite Teilkörper des erfindungsgemäßen Implantats verhindert dagegen das Einwachsen von Binde- und Epithelgewebe in die Alveole. Diese Abdeckmembran deckt die Alveole mit ihrem über die Körpergrundfläche hinausragenden Randbereich ab und bildet so eine wirksame Barriere gegen unkontrollierte Binde- und Epithelgewebeproliferation in die Alveole. Da Knochengewebe im Vergleich zum Binde- und Epithelgewebe wesentlich langsamer proliferiert, bestünde ohne die Abdeckmembran die Gefahr, dass das Binde- und Epithelgewebe den Alveolarraum schneller ausfüllt und damit das Knochenwachstum hemmt.

Aufgrund der festen Verbindung zwischen den beiden Teilkörper ist stets gewährleistet, dass sich die Abdeckmembran in Relation zu dem Kegel-(stumpf) und der Alveole in der richtigen Position befindet und auch während der Wundheilung in dieser Position bleibt. Die feste Verbindung zwischen den beiden Teilkörpern verhindert außerdem, dass beim Einsetzen Fehler passieren, beispielsweise, dass die Abdeckmembran falsch platziert wird und die Alveole nicht vollständig abdeckt. Der Verbundkörper des erfindungsgemäßen Implantats ist also besonders einfach und zuverlässig in der Handhabung und verkürzt die Behandlungsdauer.

Dadurch, dass die Abdeckmembran in einem über die Körpergrundfläche hinaus stehenden Randbereich ein- oder mehrfach geschlitzt ist, vereinfacht sich die Applikation zur Abdeckung der Alveole weiter.

Insgesamt schafft das erfindungsgemäße Implantat einen "Regenerativen Raum", aufgrund dessen die physiologische Wundheilung gefördert und ein Verlust von Knochenmasse vermieden wird.

Vorteilhafte Ausgestaltungen des erfindungsgemäßen resorbierbaren Implantats ergeben sich aus den Merkmalen der von Anspruch 1 abhängigen Ansprüche.

Günstig ist eine Variante, bei der der erste Teilkörper zumindest teilweise aus einem porösen Kollagen, z.B. aus lyophilisiertem, getrocknetem oder mittels Verfilzen hergestelltem Kollagen, vorzugsweise aus rekonstituiertem Kollagen vom Typ1 besteht. Weiterhin ist es bevorzugt vorgesehen, dass das Kollagen des ersten Teilkörpers eine Dichte von 1 bis 25 mg/cm³, vorzugsweise von 5 bis 12 mg/cm³, hat. Kollagen mit diesen Dichtewerten lässt sich besonders gut herstellen. Kollagen ist als bioresorbierbares Material sehr gut verträglich und findet Anwendung zur Blutstillung, zur Füllung von Knochen und Gewebedefekten und zur Abdeckung von Wunden. Kollagen unterstützt die Blutstillung, indem Thrombozyten an den Kollagenfibrillen aggregieren und sich ein Koagulum bildet. Durch die Wirkung von eingewanderten Makrophagen und körpereigener Kollagenase wird das Kollagen im Rahmen der Wundheilung komplett resorbiert.

Gemäß einer anderen vorteilhaften Variante hat der erste Teilkörper einen insbesondere soliden zylindrischen oder kegelförmigen Kern aus nativem, aufbereitetem Knochenmaterial, wie z.B. Spongiosa, oder aus synthetischem Knochenersatzmaterial, wie z.B. Tricalciumphosphat, Hydroxylapatit oder einem ähnlichen keramischen Material. Alternativ dazu kann der erste Teilkörper aber ebenso vorzugsweise aus einem Mischmaterial mit einem Kollagenanteil und einem in den Kollagenanteil homogen verteilt eingelagerten Knochenanteil bestehen, wobei der Knochenanteil durch Knochenersatzmaterial oder durch zerkleinertes natives, aufbereitetes Knochenmaterial, wie z.B. Spongiosa, gebildet ist. Der bei der ersten Variante mittels des gesonderten Kerns zugesetzte bzw. bei der zweiten Variante homogen zugemischte Knochenanteil bewegt sich jeweils insbesondere im Bereich zwischen 5 % und 90 % des Volumens des ersten Teilkörpers. Beide Varianten fordern die Knochenbildung in dem Alveolarraum während des Wundheilungsprozesses.

Gemäß einer weiteren günstigen Ausgestaltung besteht der zweite Teilkörper aus einem verdichteten Kollagen mit insbesondere geringerer Porengröße als der des Kollagens des ersten Teilkörpers. Das verdichtete Kollagen bildet insbesondere einen Film, eine Folie oder einen verdichteten Schwamm. Vorzugsweise ist das verdichtete Kollagen des zweiten Teilkörpers ein verdichtetes Lyophilisat aus rekonstituiertem Kollagen. Im Gegensatz zu dem poröseren ersten Teilkörper, bei dem die Wundheilung und Gewebebildung im Vordergrund steht, dient der zweite Teilkörper als Barriere gegen ein Einwachsen von Binde- und Epithelgewebe. Eine an dieser Stelle gerade nicht erwünschte Gewebebildung wird durch die Verwendung von verdichtetem Kollagen verhindert oder zumindest deutlich erschwert. Insbesondere ist das Kollagen des zweiten Teilkörpers um den Faktor 0,5 bis 5 dichter als das des ersten Teilkörpers.

Gemäß einer weiteren bevorzugten Ausgestaltung kann zumindest einer der beiden Teilkörper aus einem Material bestehen, das zumindest einen wundheilenden und/oder das Knochenwachstum fördernden bioaktiven Bestandteil enthält. Bei diesem bioaktiven Bestandteil handelt es sich vorzugsweise um ein natives isoliertes oder biotechnologisch gewonnenes Protein, nämlich BMP-2 (= Bone Morphogenic Protein 2). Hierunter fällt unter anderem auch TGF beta (TGF = Transforming Growth Factor) oder ähnliches, also insbesondere Wachstumsfaktoren ganz allgemein.

Gemäß einer anderen ebenfalls günstigen Ausgestaltung kann zumindest einer der beiden Teilkörper aus einem Material bestehen, das zumindest einen antimikrobiellen Bestandteil enthält. Dieser antimikrobielle Bestandteil trägt dazu bei, Infektionen zu verhindern und/oder zu bekämpfen. Es handelt sich hierbei vorzugsweise um ein lokal verträgliches Antiseptikum, wie z.B. Polihexanid, Octenidin, Silberionen, Jodderivate oder ähnliches. Ebenso kann eine für die lokale Anwendung geeignete antibiotisch wirkende Substanz, wie z.B. Gentamicin, Metronidazol, Vancomycin oder ähnliches, zum Einsatz kommen.

Weiterhin ist es vorzugsweise vorgesehen, dass der Verbundkörper zumindest teilweise, insbesondere der Kegel(stumpf) oder die Abdeckmembran anteilig oder vollständig, aus einer Gelatine oder einer oxidierten Cellulose besteht. Auch diese Stoffe sind vollständig resorbierbar und biologisch gut verträglich. Bei der Gelatine kann es dabei insbesondere auch um ein kollagenhaltiges Material handeln, dessen Kollagen stärker denaturiert ist als bei den zuvor genannten Kollagenmaterialien (= lyophilisiertes und/oder rekonstituiertes Kollagen vom Typ 1). Die oxidierte Cellulose ist ein anderes Biopolymer. Der Verbundkörper kann auch aus einer Mischung aus einem der zuvor genannten Kollagenmaterialien und der Gelatine und/oder der oxidierten Cellulose bestehen.

Gemäß weiteren vorteilhaften Ausgestaltungen hat der Verbundkörper die im Folgenden genannten besonders günstigen geometrischen Abmessungen, die zu einer sehr guten Anpassung an den Einsatzzweck, also das Einsetzen in die Alveole und das Abdecken der Alveole, führt. Die eine Gesamthöhe des Verbundkörpers beträgt insbesondere mindestens 1,6 cm. Weiterhin hat die Körpergrundfläche des ersten Teilkörpers einen bevorzugten Durchmesser von 1 cm bis 1,5 cm, vorzugsweise von 1,3 cm. Eine Kegelhöhe des ersten Teilkörpers beträgt insbesondere zwischen 1 cm und 3 cm, vorzugsweise zwischen 1,3 cm und 1,7 cm. Der zweite Teilkörper hat bevorzugt eine Membrandicke von zwischen 0,05 cm und 0,5 cm und einen Membrandurchmesser, der um 0,2 cm bis 2 cm größer ist als ein Durchmesser der Körpergrundfläche und der insbesondere mindestens 1,4 cm beträgt.

Gemäß einer weiteren vorteilhaften Ausgestaltung umfasst die Abdeckmembran einen in etwa kreisrunden Mittenabschnitt, an dessen Außenumfang mindestens ein länglicher, seitlich abstehender Membranflügel einstückig angebracht ist. Insbesondere sind zwei derartige Membranflügel vorgesehen, die einander gegenüber liegen. Sie dienen zur Abdeckung vestibulärer und palatinaler Knochendefekte.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines resorbierbaren Implantats als Verbundkörper aus einem Kegelstumpf und einer Abdeck- membran in einer Explosionsdarstellung,
- Fig. 2: das Implantat gemäß Fig. 1 in einer Draufsicht von oben auf die Abdeckmembran,
- Fig. 3: einen in einer Alveole sitzenden Zahn in einer Querschnitts- darstellung,
- Fig. 4: ein Ausführungsbeispiel eines resorbierbaren aus einem Ke- gelstumpf und einer Abdeckmembran bestehenden Implan- tats, das nach einer Extraktion des Zahns in die Alveole ge- mäß Fig. 3 eingesetzt ist,
- Fig. 5 bis 7: ein weiteres Ausführungsbeispiel eines resorbierbaren aus einem Kegelstumpf und einer seitlich verlängerten Abdeck- membran bestehenden Implantats in einer perspektivischen Ansicht, in einer Ansicht von unten und in einer Seitenan- sicht, und
- Fig. 8: das Implantat gemäß Fig. 5 bis 7 in einen eingesetzten Zu- stand.

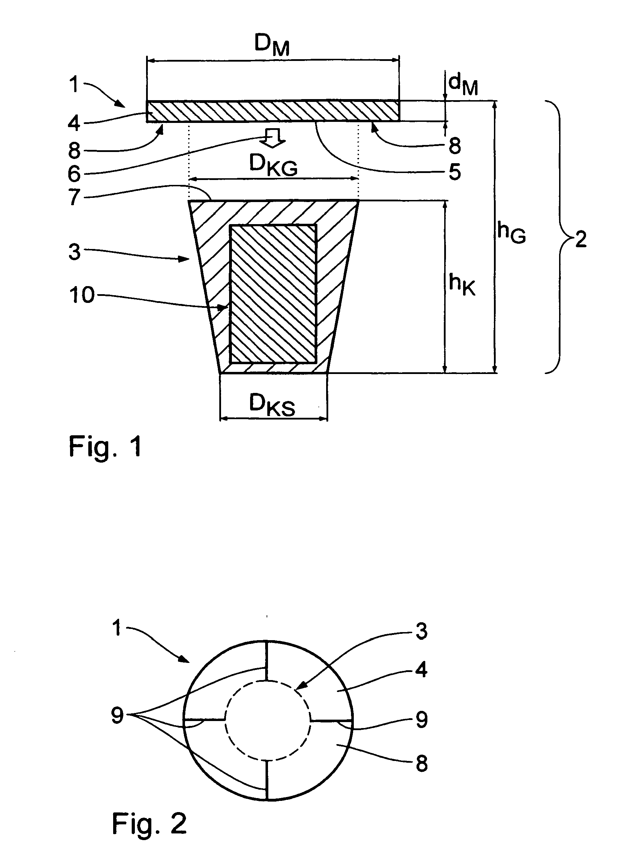

Einander entsprechende Teile sind in den Fig. 1 bis 8 mit denselben Bezugszeichen versehen.

In Fig. 1 ist ein Ausführungsbeispiel eines resorbierbaren Implantats 1, das als Verbundkörper 2 aus zwei Teilkörpern ausgeführt ist, gezeigt. Bei dem ersten Teilkörper handelt es sich um einen Kegelstumpf 3, bei dem zweiten Teilkörper um eine im Wesentlichen runde Abdeckmembran 4. Der Kegelstumpf 3 und die Abdeckmembran 4 sind bei dem resorbierbaren Implantat 1 fest miteinander verbunden. Die Abdeckmembran 4 mit einer unteren Membranfläche 5 ist, wie in Fig. 1 durch den Pfeil 6 angedeutet, in etwa konzentrisch auf eine als obere Kegelgrundfläche 7 ausgebildete Körpergrundfläche des Kegelstumpfs 3 aufgesetzt. Die Membranfläche 5 ist größer als die Kegelgrundfläche 7. Sie steht in einem Randbereich 8 über die Kegelgrundfläche 7 hinaus. Im Randbereich 8 ist die Abdeckmembran 4 geschlitzt. Um eine einfachere Applikation zu ermöglichen, sind bei dem gezeigten Ausführungsbeispiel (siehe Draufsicht gemäß Fig. 2) insgesamt vier gleichmäßig über den Umfang verteilt angeordnete, in radiale Richtung verlaufende Schlitze 9 vorgesehen.

Beim Ausführungsbeispiel hat die Kegelgrundfläche 7 des Kegelstumpfs 3 einen Durchmesser D_{KG} von etwa 1,3 cm. Ein Durchmesser D_{KS} an dem schmalen Ende des Kegelstumpfs 3 beträgt etwa 0,9 cm. Seine Höhe h_{K} liegt bei ungefähr 1,5 cm. Die Abdeckmembran 4 hat einen Membrandurchmesser D_{M} von etwa 2 cm und eine Membrandicke d_{M} von etwa 0,1 cm, so dass eine Gesamthöhe h_{G} des Verbundkörpers 2 etwa 1,6 cm beträgt.

In dem Bereich, in dem die Membranfläche 5 und die Kegelgrundfläche 7 aneinander angrenzen, sind der Kegelstumpf 3 und die Abdeckmembran 4 mittels der Klebekraft der kollagenhaltigen Materialien, aus denen der Kegelstumpf 3 und die Abdeckmembran 4 jeweils gefertigt sind, fest miteinander verbunden. Die beiden Teile 3 und 4 des Verbundkörpers 2 werden zusammengefügt, solange bei zumindest einem der beiden das kollagenhaltige Material noch nicht ausgetrocknet ist, so dass die natürliche Klebekraftwirkung des kollagenhaltigen Materials zur Herstellung der festen Verbindung genutzt wird. Dies ist günstig, da so keine gesonderten Klebe-oder Verbindungsmittel erforderlich sind.

Der Kegelstumpf 3 besteht beim in Fig. 1 gezeigten Ausführungsbeispiel aus einem porösen Kollagenlyphilisat mit einer Dichte von 7 mg/cm³. In ihm eingeschlossen ist optional ein in Fig. 1 mit dargestellter zylindrischer oder kegel(stumpf)förmiger Kern 10 aus einem Knochenmaterial, beispielsweise aus nativem, aufbereitetem Spongiosa-Material oder aus einem synthetisch hergestellten Material wie Tricalciumphosphat oder Hydroxylapatit.

Die Abdeckmembran 4 besteht beim in Fig. 1 gezeigten Ausführungsbeispiel aus einem verdichteten Lyophilisat aus rekonstituiertem Kollagen. Das Kollagenmaterial der Abdeckmembran 4 hat eine geringere Porengröße als das des Kegelstumpfs 3. Die Abdeckmembran 4 ist beispielsweise als Folie oder verdichteter Schwamm aus dem genannten Kollagen ausgebildet. Ihre Dichte liegt etwa um den Faktor zwei höher als diejenige des Kegelstumpfs 3.

Das Implantat 1 wird z.B. folgendermaßen hergestellt. Zunächst wird die Abdeckmembran 4 lyophilisiert, gepresst und zugeschnitten. Danach wird eine flüssige Kollagensuspension in eine Kegelstumpfform eingebracht, um den Kegelstumpf 3 zu bilden. Die Abdeckmembran 4 wird auf diese Kollagensuspension aufgebracht, solange sich letztere in noch flüssigem Zustand befindet. Mittels eines abschließenden Lyophilisationsschrittes entsteht der Verbundkörper 2 mit dem porösen Kollagen-Kegelstumpf 3 und der Kollagen-Abdeckmembran 4 als fest verbundene Einheit.

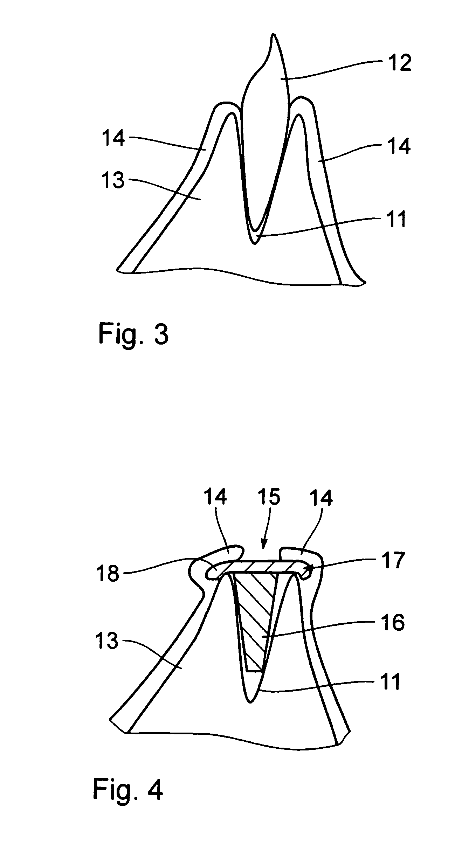

In Fig. 3 ist ein in einer Alveole 11 sitzender Zahn 12 gezeigt. Die Alveole 11 ist durch den Kieferknochen 13 gebildet, der an seiner Außenseite mit Binde- und Epithelgewebe 14 bedeckt ist.

Nach der Extraktion des Zahns 12 wird die Alveole 11 sofort mit einem resorbierbaren Implantat 15, das im Wesentlichen wie das Implantat 1 gemäß Fig. 1 und 2 aufgebaut ist, bestückt (siehe Fig. 4). Im Unterschied zu dem Implantat 1 enthält ein Kegelstumpf 16 des Implantats 15 keinen Kern aus Knochen(ersatz)material. Ansonsten hat das Implantat 15 genau wie das Implantat 1 eine ebenfalls fest mit dem Kegelstumpf 16 verbundene Abdeckmembran 17.

Aufgrund seiner an den Alveolarraum angepassten kegeligen Kontur füllt der Kegelstumpf 16 die Alveole 1 im gesamten Bereich sehr gut aus, so dass sich in der gesamten Alveole 11 ein stabiles, die Wundheilung begünstigendes Koagulum ausbilden kann. Der Kegelstumpf 16 ist plastisch verformbar und passt sich damit der Alveole 11 gut an. So wird eine Stabilisierung des Koagulums in der gesamten Alveole 11 erreicht. Der Kegelstumpf 16 wirkt osteokonduktiv, d.h. er erleichtert das Einwachsen von neuem Knochengewebe in die Alveole 11.

Der Kegelstumpf 16 wird außer durch seine Form auch durch die Abdeckmembran 17, die mit ihrem seitlich überstehenden Randbereich 18 auf dem Kieferknochen 13 aufliegt, in der richtigen Position gehalten. Aufgrund der Abdeckmembran 17 ist eine sehr genaue vertikale und horizontale Positionierung des Implantats 15 insgesamt möglich. Die Anwendung vereinfacht sich und wird sicherer. Wegen der fixen Kombination kann es zu keiner Relativverschiebung zwischen der Abdeckmembran 17 und dem Kegelstumpf 16 kommen. Darüber hinaus erfüllt die Abdeckmembran 17 eine den Alveolarraum abschirmende Funktion, wodurch das Binde- und Epithelgewebe 14 an einem unerwünschten Einwachsen in die Alveole 11 gehindert wird. Da Knochengewebe im Vergleich zu dem Binde- und Epithelgewebe 14 wesentlich langsamer proliferiert, würde das Binde- und Epithelgewebe 14 ohne die durch die Abdeckmembran 17 gebildete Barriere den Alveolarraum schneller ausfüllen und damit das Knochenwachstum hemmen.

Die Implantate 1 und 15 sind resorbierbar und insbesondere auch blutstillend. Eingesetzt in die Alveole 11 (Zahntasche) bewirken sie nach einer Zahnextraktion eine Blutstillung und verhindern vorteilhafterweise einen Kollaps der Alveole 11. Mit fortschreitendem entzündungsfreiem Heilungsprozess wird außerdem sogar eine Knochenbildung innerhalb der Alveole 11 begünstigt (= osteokonduktive Wirkung). Die Implantate 1 und 15 schaffen also einen "Regenerativen Raum", mittels dessen die physiologische Wundheilung gefördert und ein Verlust von Knochenmasse vermieden wird. Die so erhaltene bzw. zusätzliche aufgebaute Knochenmasse der Alveole 11 kann dann als Basis für eine später vorgesehene Implantation eines Zahnersatzes dienen.

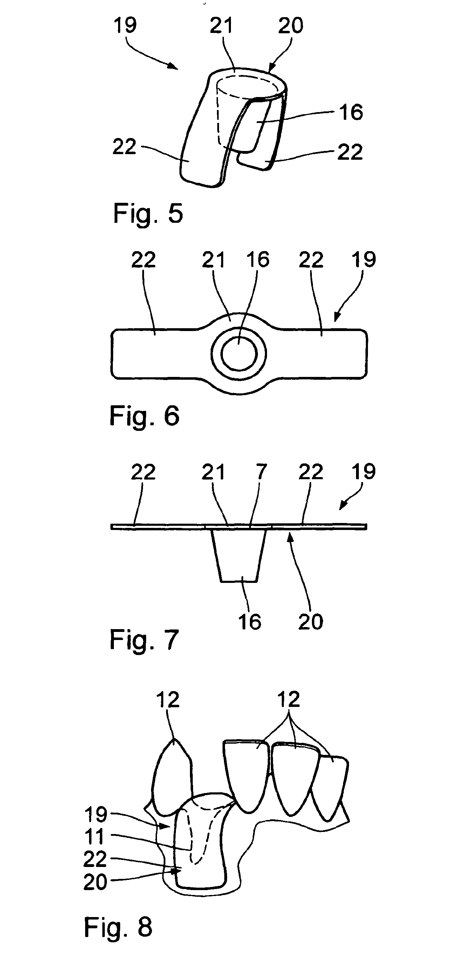

In Fig. 5 bis 7 ist ein weiteres Ausführungsbeispiel eines resorbierbaren Implantats 19 gezeigt. Es umfasst einen ähnlichen plastisch verformbaren Kegelstumpf 16 wie das Implantat 15 gemäß Fig. 4. Auch bei dem Implantat 19 ist eine aus Kollagen bestehende Abdeckmembran 20 fest mit dem Kegelstumpf 16 verbunden. Die Abdeckmembran 20 ist etwas anders ausgestaltet als die Abdeckmembran 4 oder 17 gemäß Fig. 1 und 2 bzw. 4. Sie hat zwar ebenfalls einen in etwa kreisrunden Mittenabschnitt 21, die wiederum größer ist als die Kegelgrundfläche 7 des Kegelstumpfs 16 (vgl. die Ansicht von unten gemäß Fig. 6). An den Mittenabschnitt 21 sind aber zusätzlich zwei seitliche Membranflügel 22 jeweils einstückig angeformt. Die beiden länglichen Membranflügel 22 liegen einander gegenüber. Sie sind also in Umfangsrichtung des Mittenabschnitts 21 um etwa 180° gegen einander versetzt an dem Mittenabschnitt 21 angebracht. Ihre Ausdehnung in Längsrichtung ist jeweils vorzugsweise etwa genauso lang wie die Höhe hₖ des Kegelstumpfs 16. Gegebenenfalls kann ihre Länge aber auch größer sein als die Höhe hₖ des Kegelstumpfs 16. Die Membranflügel 22 stellen seitliche Verlängerungen des Mittenabschnitts 21 dar.

Die Wirkung der Membranflügel 22 geht aus der in Fig. 8 gezeigten Abbildung des Implantats 19 in seinem eingesetzten Zustand hervor. Die Membranflügel 22 decken den Bereich der Alveole 11 vestibulär und palatinal ab. Dies ist insbesondere dann von Vorteil, wenn in diesem Bereich Knochendefekte bestehen. Dann verhindern die Membranflügel 22 auch an diesen Stellen ein unkontrolliertes Vordringen von Binde- und Epithelgewebe, das ansonsten zulasten einer Regeneration des Knochengewebes ginge.

## Patentansprüche

1. Implantat zum Einbringen in einen Alveolarraum (11), welches als resorbierbarer Verbundkörper (2) aus mindestens einem ersten und einem zweiten Teilkörper (3, 4; 16, 17; 16, 20) ausgeführt ist, wobei
a) der erste Teilkörper als ein eine Körpergrundfläche (7) aufweisender Kegel, Kegelstumpf (3; 16) oder Zylinder ausgebildet ist,
b) der zweite Teilkörper als eine Abdeckmembran (4; 17; 20) mit einer Membranfläche (5), die größer als die Körpergrundfläche (7) ist, ausgebildet ist,
c) der erste und der zweite Teilkörper (3, 4; 16, 17; 16, 20) im Bereich der aneinander angrenzenden Körpergrundfläche (7) und Membranfläche (5) fest miteinander verbunden sind,
d) die Abdeckmembran (4; 17; 20) auf die Körpergrundfläche (7) aufgesetzt ist, so dass sie seitlich überall über die Körpergrundfläche (7) hinausragt, und
e) die Abdeckmembran (4; 17) in einem über die Körpergrundfläche (7) hinaus stehenden Randbereich (8; 18) ein- oder mehrfach geschlitzt ist.

2. Implantat nach Anspruch 1, bei dem der erste Teilkörper (3; 16) zumindest teilweise aus einem porösen Kollagen, vorzugsweise aus rekonstituiertem Kollagen vom Typ 1 besteht.

3. Implantat nach Anspruch 2, bei dem das Kollagen des ersten Teilkörpers (3; 16) eine Dichte von 1 bis 25 mg/cm³, vorzugsweise von 5 bis 12 mg/cm³, hat ,

4. Implantat nach Anspruch 1, bei dem der erste Teilkörper (3) einen Kern (10) aus nativem, aufbereitetem Knochenmaterial oder aus synthetischem Knochenersatzmaterial hat.

5. Implantat nach Anspruch 1, bei dem der erste Teilkörper (16) aus einem Mischmaterial mit einem Kollagenanteil und einem in den Kollagenanteil homogen verteilt eingelagerten Knochenanteil besteht, wobei der Knochenanteil durch Knochenersatzmaterial oder durch zerkleinertes natives, aufbereitetes Knochenmaterial gebildet ist.

6. Implantat nach Anspruch 1, bei dem der zweite Teilkörper (4; 17; 20) aus einem verdichteten Kollagen mit insbesondere geringerer Porengröße als der des Kollagens des ersten Teilkörpers (3; 16) besteht, und das verdichtete Kollagen insbesondere einen Film, eine Folie oder einen verdichteten Schwamm bildet.

7. Implantat nach Anspruch 6, bei dem das ver-dichtete Kollagen des zweiten Teilkörpers (4; 17; 20) ein verdichtetes Lyophilisat aus rekonstituiertem Kollagen ist.

8. Implantat nach Anspruch 1, bei dem zumindest einer der beiden Teilkörper (3, 4; 16, 17; 16, 20) aus einem Material besteht, das zumindest einen wundheilenden oder das Knochenwachs-tum fördernden bioaktiven Bestandteil enthält.

9. Implantat nach Anspruch 1, bei dem zumindest einer der beiden Teilkörper (3, 4; 16, 17; 16, 20) aus einem Material besteht, das zumindest einen antimikrobiellen oder antibiotisch wir-kenden Bestandteil enthält.

10. Implantat nach Anspruch 1, bei dem der Verbundkörper (2) zumindest teilweise aus einer Gelatine oder einer oxidierten Cellulose besteht.

11. Implantat nach Anspruch 1, bei dem eine Gesamthöhe (h_{G}) des Verbundkörpers (2) mindestens 1,6 cm beträgt.

12. Implantat nach Anspruch 1, wobei bei dem ersten Teilkörper (3; 16) die Körpergrundfläche (7) einen Durchmesser (D_{KG}) von 1 cm bis 1,5 cm, vorzugsweise von 1,3 cm, hat und eine Ke-gelhöhe (h_{K}) zwischen 1 cm und 3 cm, vorzugsweise zwischen 1,3 cm und 1,7 cm, beträgt.

13. Implantat nach Anspruch 1, bei dem der zweite Teilkörper (4; 17) eine Membrandicke (d_{M}) von zwischen 0,05 cm und 0,5 cm und einen Membrandurchmesser (D_{M}) hat, der um 0,2 cm bis 2 cm größer ist als ein Durchmesser (D_{KG}) der Körpergrundfläche (7) und der insbesondere mindestens 1,4 cm beträgt.

14. Implantat nach Anspruch 1, bei dem die Abdeckmembran (20) einen in etwa kreisrunden Mittenabschnitt (21) umfasst, an dessen Außenumfang mindestens ein länglicher, seitlich abstehender Membranflügel (22) einstückig angebracht ist.

## Claims

1. Implant for introduction into an alveolar space (11), which is configured as an absorbable composite body (2) made of at least a first and a second part body (3, 4; 16, 17; 16, 20), wherein
a) the first part body is configured as a cone, truncated cone (3; 16) or cylinder having a body base face (7),
b) the second part body is configured as a cover membrane (4; 17; 20) with a membrane face (5), which is larger than the body base face (7),
c) the first and second part body (3, 4; 16, 17; 16, 20) are rigidly connected to one another in the region of the mutually adjacent body base face (7) and membrane face (5),d) the cover membrane (4; 17; 20) is placed on the body base face (7), so it projects laterally everywhere over the body base face (7), and
e) the cover membrane (4; 17) is slit once or several times in an edge region (8; 18) projecting over the body base face (7).

2. Implant according to claim 1, in which the first part body (3; 16) consists at least partially of a porous collagen, preferably a reconstituted collagen of type 1.

3. Implant according to claim 2, in which the collagen of the first part body (3; 16) has a density of 1 to 25 mg/cm³, preferably of 5 to 12 mg/cm³.

4. Implant according to claim 1, in which the first part body (3) has a core (10) of native, prepared bone material or of synthetic replacement bone material.

5. Implant according to claim 1, in which the first part body (16) consists of a mixed material with a collagen fraction and a bone fraction incorporated homogenously distributed in the collagen fraction, the bone fraction being formed by replacement bone material or by comminuted native, prepared bone material.

6. Implant according to claim 1, in which the second part body (4; 17; 20) consists of a compacted collagen with, in particular, a smaller pore size than that of the collagen of the first part body (3; 16) and the compacted collagen, in particular, forms a film, a foil or a compacted sponge.

7. Implant according to claim 6, in which the compacted collagen of the second part body (4; 17; 20) is a compacted lyophilisate made of reconstituted collagen.

8. Implant according to claim 1, in which at least one of the two part bodies (3, 4; 16, 17; 16, 20) consists of a material, which contains at least one bioactive constituent which is wound-healing or promotes bone growth.

9. Implant according to claim 1, in which at least one of the two part bodies (3, 4; 16, 17; 16, 20) consists of a material which contains at least one antimicrobial or antibiotically acting constituent.

10. Implant according to claim 1, in which the composite body (2) at least partially consists of a gelatin or an oxidized cellulose.

11. Implant according to claim 1, in which an overall height (h_{G}) of the composite body (2) is at least 1.6 cm.

12. Implant according to claim 1, in which in the first part body (3; 16), the body base face (7) has a diameter (D_{KG}) of 1 cm to 1.5 cm, preferably of 1.3 cm and a cone height (h_{K}) is between 1 cm and 3 cm, preferably between 1.3 cm and 1.7 cm.

13. Implant according to claim 1, in which the second part body (4; 17) has a membrane thickness (d_{M}) of between 0.05 cm and 0.5 cm and a membrane diameter (D_{M}), which is larger by 0.2 cm to 2 cm than a diameter (D_{KG}) of the body base face (7) and which is, in particular, at least 1.4 cm.

14. Implant according to claim 1, **characterized in that** the cover membrane (20) comprises an approximately circular centre portion (21), on the outer periphery of which at least one elongate, laterally projecting membrane wing (22) is attached in one piece.

## Revendications

1. Implant destiné à être introduit dans une cavité alvéolaire (11), qui est conçu comme un corps composite résorbable (2) comportant au moins une première et une deuxième pièce (3, 4 ; 16, 17 ; 16, 20),
a) la première pièce étant configurée comme un cône, un cône tronqué (3 ; 16) ou un cylindre présentant une surface de base du corps (7),
b) la deuxième pièce étant conçue comme une membrane de recouvrement (4 ; 17 ; 20) présentant une surface de membrane (5) qui est plus grande que la surface de base du corps (7),
c) la première pièce et la deuxième pièce (3, 4 ; 16, 17 ; 16, 20) étant reliées solidairement dans la zone de la surface de base du corps (7) et de la surface membranaire adjacente (5),
d) la membrane de recouvrement (4 ; 17 ; 20) étant placée sur la surface de base du corps (7) de telle sorte qu'elle dépasse latéralement sur toute la surface de base du corps (7), et
e) la membrane de recouvrement (4 ; 17) étant fendue une ou plusieurs fois dans une zone de bordure (8 ; 18) sortant au-dessus de la surface de base du corps (7).

2. Implant selon la revendication 1, dans lequel la première pièce (3 ; 16) est constituée au moins partiellement d'un collagène poreux, de préférence, de collagène reconstitué de type 1.

3. Implant selon la revendication 2, dans lequel le collagène de la première pièce (3 ; 16) a une densité de 1 à 25 mg/cm ³ de préférence de 5 à 12 mg / cm³.

4. Implant selon la revendication 1, dans lequel la première pièce (3) a un noyau (10) de matériau osseux natif préparé ou de matériau de substitution osseux synthétique.

5. Implant selon la revendication 1, dans lequel la première pièce (16) est constituée d'un matériau mixte comportant une proportion de collagène et d'une proportion d'os intégrée, répartie de façon homogène dans la proportion de collagène, la proportion d'os étant formée par le matériau de substitution osseux ou par un matériau osseux natif préparé, qui est broyé.

6. Implant selon la revendication 1, dans lequel la deuxième pièce (4 ; 17 ; 20) est constituée d'un collagène compressé présentant une taille de pores particulièrement inférieure à celle du collagène de la première pièce (3 ; 16) et le collagène compressé forme particulièrement un film, une feuille ou une éponge compressée.

7. Implant selon la revendication 6, dans lequel le collagène compressé de la deuxième pièce (4 ; 17 ; 20) est un lyophilisat compressé de collagène reconstitué.

8. Implant selon la revendication 1, dans lequel au moins l'une des deux pièces (3, 4 ; 16, 17 ; 16, 20) est constituée d'un matériau qui contient au moins un composant bioactif cicatrisant des plaies ou stimulant la croissance osseuse.

9. Implant selon la revendication 1, dans lequel au moins l'une des deux pièces (3, 4 ; 16, 17 ; 16, 20) est constituée d'un matériau qui contient au moins un composant antimicrobien ou efficace d'un point de vue antibiotique.

10. Implant selon la revendication 1, dans lequel le corps composite (2) est constitué au moins partiellement d'une gélatine ou d'une cellulose oxydée.

11. Implant selon la revendication 1, dans lequel une hauteur totale (h_{G}) du corps composite (2) est d'au moins 1,6 cm.

12. Implant selon la revendication 1, dans lequel dans la première pièce (3 ; 16), la surface de base du corps (7) a un diamètre (D_{KG}) de 1 cm à 1,5 cm, de préférence de 1,3 cm et a une hauteur de cône (h_{K}) entre 1 cm et 3 cm, de préférence entre 1,3 cm et 1,7 cm.

13. Implant selon la revendication 1, dans lequel la deuxième pièce (4 ; 17) a une épaisseur de membrane (d_{M}) entre 0,05 cm et 0,5 cm et un diamètre de membrane (D_{M}) qui est de 0,2 cm à 2 cm plus grand qu'un diamètre (D_{KG}) de la surface de base du corps (7) et qui mesure en particulier au moins 1,4 cm.

14. Implant selon la revendication 1, dans lequel la membrane de recouvrement (20) comprend une section médiane (21) à peu près circulaire sur le pourtour extérieur de laquelle au moins une aile de membrane longitudinale distante latéralement est conçue d'un seul tenant.
